# EUROPÄISCHE PATENTSCHRIFT

(11) **EP 0 766 587 B1**
(45) Veröffentlichungstag und Bekanntmachung des Hinweises auf die Patenterteilung: **22.07.1998**
(21) Anmeldenummer: 95920022.1
(22) Anmeldetag: 11.05.1995
(51) Int. Cl.: B01D 21/06, B01D 21/24, F16C 19/00

(54) **VORLÄUFERBRÜCKE ZUR SCHWIMMSCHLAMMRÄUMUNG**
PRELIMINARY BOOM FOR CLEARING SLUDGE FROM THE SURFACE OF A SEWAGE BASIN
PONT PRIMAIRE POUR LE RACLAGE DE BOUES SURNAGEANTES

(30) Priorität: 24.06.1994 DE 9410208 U
(43) Veröffentlichungstag der Anmeldung: 09.04.1997
(73) Patentinhaber: PASSAVANT-WERKE AG, 65322 Aarbergen 7 (DE)
(72) Erfinder: KETTENBACH, Karl, D-65326 Aarbergen 2 (DE); SKOCIC, Ante, D-65549 Limburg a.d. Lahn (DE); WALZ, Günter, D-65549 Limburg a.d. Lahn (DE)
(86) Internationale Anmeldenummer: EP9501783
(87) Internationale Veröffentlichungsnummer: WO9600120

(56) Entgegenhaltungen:
- DE-A- 3 345 868
- FR-A- 2 429 610
- GB-A- 1 565 389

## Beschreibung

### Technisches Sachgebiet:

Die Erfindung betrifft eine Vorläuferbrücke zur Schwimmschlammräumung für Rundbecken mit Räumern gemäß den Merkmalen des Oberbegriffes des Anspruchs 1.

### Stand der Technik:

Derartige Vorläuferbrücken sind beispielsweise aus der DE-C-3345868 bekannt. Sie sind üblicherweise an ihrem einen Ende an einem Mittelbau des Rundbeckens, an dem auch die eigentliche Räumerbrücke befestigt ist, über ein Zentrallager schwenkbar gelagert und stützen sich an ihrem anderen Ende mittels eines Fahrwerkes auf der Beckenkrone des Rundbeckens ab. Zur möglichst vollständigen Schwimmschlammräumung der Rundbecken wird die Vorläuferbrücke zunächst gegenüber der Räumerbrücke um einen Winkel von z. B. 30 ° oder 45 ° vorgeschwenkt, in dieser Position fixiert und dann ein Stauschild in die Schwimmschlammschicht abgesenkt. Anschließend wird die Räumerbrücke mit abgesenktem Räumerschild in Richtung der Vorläuferbrücke verschoben. Hat die Räumerbrücke die Vorläuferbrücke erreicht, wird der zwischen dem Räum- und Stauschild eingesperrte Schwimmschlamm mittels eines Räumbalkens zum Mittelbau hin, z. B. in eine entsprechende Rinne, zum Abtransport befördert.

Aus der DE-A-40 23 557 ist es weiterhin bekannt, das Räumelement an der Räumerbrücke als Rinne mit einer vorne liegenden, als Räumschild dienenden, schwenkbaren Überfallkante auszubilden, in die der Schwimmschlamm in der Endstellung der beiden Schilde fließt.

Die vorstehend beschriebenen Rundbecken mit Vorläuferbrücken zur Schwimmschlammräumung haben sich in der Praxis gut bewährt, so daß die Betreiber älterer Kläranlagen zur Schwimmschlammräumung ihre Becken mit Rundräumern zusätzlich mit einer Vorläuferbrücke nachrüsten lassen möchten.

Eine derartige Nachrüstung ist allerdings außerordentlich aufwendig, weil zunächst der vorhandene Rundräumer von dem Mittelbau abgebaut werden muß, wobei es außerdem häufig zu Beschädigungen von Teilen der vorhandenen Anlage kommt. Nach dem Abbau des vorhandenen Rundräumers wird das Zentrallager für die Vorläuferbrücke montiert und anschließend dann der Rundräumer wieder an dem Mittelbau befestigt.

Der Erfindung liegt die Aufgabe zugrunde, eine Vorläuferbrücke der eingangs erwähnten Art anzugeben, die auf einfache Weise nachträglich an dem Mittelbau eines schon mit einer Räumerbrücke ausgerüsteten Rundbeckens befestigbar ist und die im montierten Zustand einen sicheren Rundlauf gewährleistet.

### Darstellung der Erfindung

Diese Aufgabe wird erfindungsgemäß durch die Merkmale des kennzeichnenden Teils des Anspruchs 1 gelöst. Weitere besonders vorteilhafte Ausgestaltungen der Erfindung offenbaren die Unteransprüche.

Die Erfindung beruht im wesentlichen auf dem Gedanken, das Zentrallager der Vorläuferbrücke in Umfangsrichtung mehrteilig auszubilden. Hierzu setzt sich das Zentrallager aus einem in Umfangsrichtung jeweils mindestens zweiteiligen Außenring, an dem die Vorläuferbrücke befestigt ist und einem in Umfangsrichtung mindestens zweiteiligen Innenring zusammen, der mit dem Mittelbau fest verbindbar ist und ein U-förmiges Profil mit dem Außenring zugewandter Öffnung aufweist.

Um zu gewährleisten, daß das gesamte mittelbauseitige Gewicht der Vorläuferbrücke sicher von dem Zentrallager aufgenommen wird und dabei außerdem ein einwandfreier Rundlauf der Vorläuferbrücke erreicht wird, sind erfindungsgemäß umfangsseitig auf der dem Innenring zugewandten Seite des Außenringes über dessen gesamten Umfang verteilt mehrere Laufrollenanordnungen befestigt, die in das U-Profil des Innenringes hineinreichen und entweder auf dem unteren oder dem oberen Schenkel des U-Profiles drehbar aufliegen und dessen mittelbauseitige Last aufnehmen.

Es hat sich besonders bewährt, immer jeweils zwei Laufrollen über einen an dem Außenring schwenkbar befestigten Kippträger miteinander zu verbinden (Pendelrollenlager), weil die gesamte mittelbauseitige Last des Außenringes dann gleichmäßig auf den Innenring übertragen wird. Vorzugsweise werden auf dem gesamten Umfang des Zentrallagers vier Pendellager gleichmäßig verteilt, wobei jeweils zwei Pendellager auf der der Vorläuferbrücke zugewandten Halbseite des Außenringes und jeweils zwei Pendellager auf der der Vorläuferbrücke abgewandten Halbseite des Außenringes befestigt sind. Bei den der Vorläuferbrücke zugewandten Pendellagern drücken die Laufrollen auf den dem Mittelbau zugewandten (unteren) Schenke des U-Profiles. Hingegen drücken die Laufrollen der beiden Pendellager, die sich auf der der Vorläuferbrücke abgewandten Seite befinden, gegen den oberen Schenkel des U-Profiles, so daß sie in erster Linie eine Stützfunktion erfüllen sollen.

Um eine ausreichende radiale Abstützung des Außenringes gegenüber dem Innenring zu gewährleisten und nach der Montage des Zentrallagers den Außenring in bezug auf den Innenring genau zu zentrieren, sind zwischen den beiden Ringen einstellbare Zentrierrollen vorgesehen.

Der Außenring besteht vorzugsweise aus einem geschlossenen Hohlprofilteil. Dadurch wird einerseits eine ausreichende Biegesteifigkeit gewährleistet und andererseits kann das Gewicht des Ringes relativ gering gehalten werden.

Weitere Einzelheiten und Vorteile der Erfindung ergeben sich aus dem folgenden anhand von Figuren erläuterten Ausführungsbeispiel. Es zeigen:
- Fig.1: eine Draufsicht auf einen Ausschnitt eines Rundbeckens mit Räumerbrücke und erfindungsgemäßer Vorläuferbrücke;
- Fig.2: eine vergrößerte Draufsicht auf das Zentrallager der in Fig.1 dargestellten Vorläuferbrücke;
- Fig.3: einen Querschnitt des Zentrallagers im Bereich einer Laufrolle entlang der in Fig.2 mit III-III bezeichneten Schnittlinie und
- Fig.4: einen Querschnitt des Zentrallagers im Bereich einer Zentrierrolle entlang der in Fig.2 mit IV-IV bezeichneten Schnittlinie.

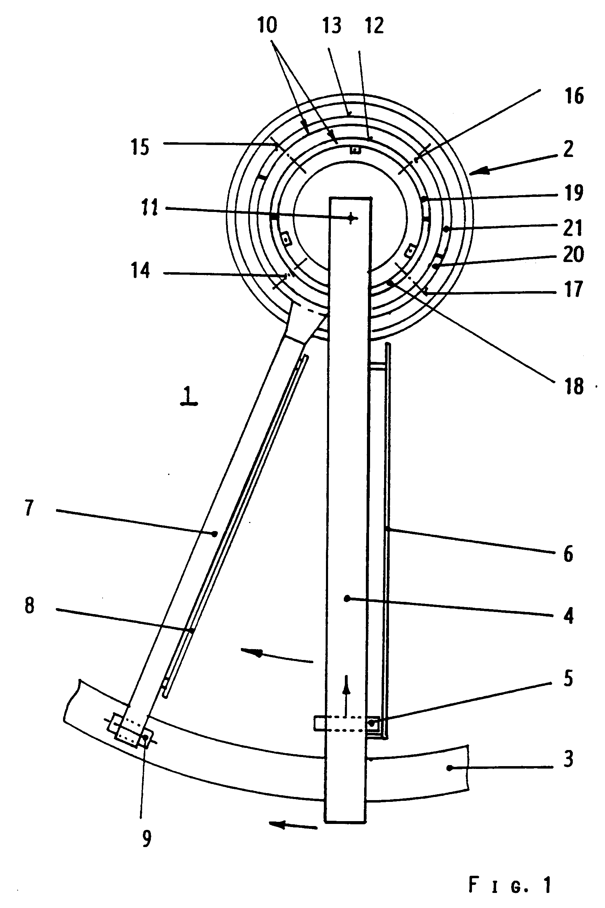

In Fig. 1 ist mit 1 ein Rundbecken mit einem Mittelbau 2 und einer kreisförmigen Beckenkrone 3 bezeichnet. Am Mittelbau 2 ist eine Räumerbrücke 4 mit Räumbalken 5 und Räumschild 6 drehbar gelagert und auf der Beckenkrone 3 mittels eines nicht dargestellten Fahrwerkes abgestützt.

zum Stauen des Schwimmschlammes ist eine Vorläuferbrücke 7 mit Stauschild 8 vorgesehen, die ebenfalls schwenkbar am. Mittelbau 2 angeordnet ist, und die sich über ein Fahrwerk 9 auf der Beckenkrone 3 abstützt. Die Schwenkbewegung der Vorläuferbrücke 7 wird mit Hilfe eines Zentrallagers 10, dessen Achse im montierten Zustand mit der Längsachse 11 des Mittelbaues 2 zusammenfällt, realisiert. Das Zentrallager 10 besteht im wesentlichen aus einem an dem Mittelbau 2 befestigten Innenring 12 und einem um den Innenring 12 drehbar angeordneten Außenring 13, an welchem die Vorläuferbrücke 7 befestigt ist. Dabei befinden sich zwischen Innenring 12 und Außenring 13 Laufrollenanordnungen 14-17, die in Fig.1 lediglich durch strichpunktierte Linien angedeutet sind und deren Aufbau nachfolgend noch näher erläutert wird.

Sowohl der Innenring 12 als auch der Außenring 13 sind in Umfangsrichtung gesehen zweiteilig ausgebildet und bestehen jeweils aus zwei bogenförmigen Segmenten 18, 19 bzw. 20, 21, die jeweils miteinander verbindbar sind.

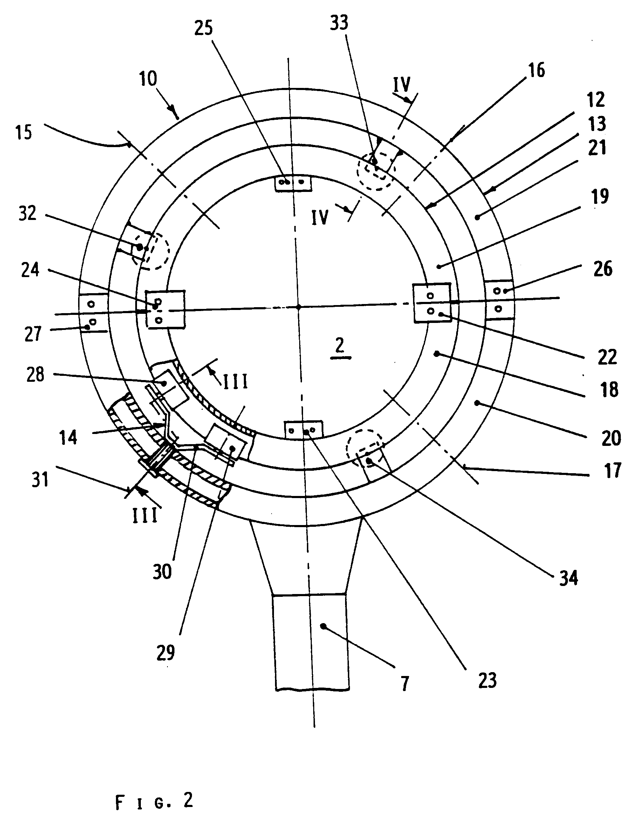

Fig.2 zeigt eine gegenüber Fig.1 vergrößerte Draufsicht auf das erfindungsgemäße Zentrallager 10 der Vorläuferbrücke 7. Dabei sind mit den Bezugszeichen 22-25 schematisch die Verbindungsteile bezeichnet, mit denen der Innenring 12 an dem Mittelbau 2 befestigt ist. Die Verbindungsteile 22 und 24 dienen gleichzeitig zur Verbindung der Innenringsegmente 18 und 19 miteinander. Die entsprechenden Segmente 20, 21 des Außenringes 13 sind mit Hilfe von Verbindungsteilen 26, 27 miteinander verbunden. Während der Innenring 12 ein U-förmiges Profil aufweist, dessen Öffnung dem Außenring 13 zugewandt ist, besitzt der Außenring 13 vor allem aus Gewichts- und Stabilitätsgründen vorteilhafterweise ein Hohlprofil.

Wie in Fig.2 für die Laufrollenanordnung 14 dargestellt ist, setzen sich die Rollenanordnungen 14-17 jeweils aus zwei Tonnenrollen 28, 29 zusammen. Diese sind mittels eines Kippträgers 30, welcher um die Befestigungsachse 31 des Trägers 30 an dem Außenring 13 drehbar angeordnet ist, verbunden. Dabei reichen die Tonnenrollen 28, 29 in das U-Profil des Innenringes 12 hinein und drücken im Falle der Rollenanordnungen 14 und 17 auf den unteren Schenkel und im Falle der Rollenanordnungen 15 und 16 auf den oberen Schenkel des Innenringes 12. Durch diese Pendellageranordnungen der Laufrollen wird erreicht, daß die gesamte mittelbauseitige Last des Außenringes 13 mit Vorläuferbrücke 7 gleichmäßig auf die Rollen der Rollenanordnungen 14-17 verteilt wird.

Um eine ausreichende radiale Abstützung des Außenringes 13 gegenüber dem Innenring 12 zu gewährleisten und den Außenring 13 des Zentrallagers 10 in bezug auf den Innenring 12 genau zu zentrieren, sind zwischen den beiden Ringen drei über den Umfang des Zentrallagers 10 verteilte einstellbare Zentrierrollen 32-34 vorgesehen.

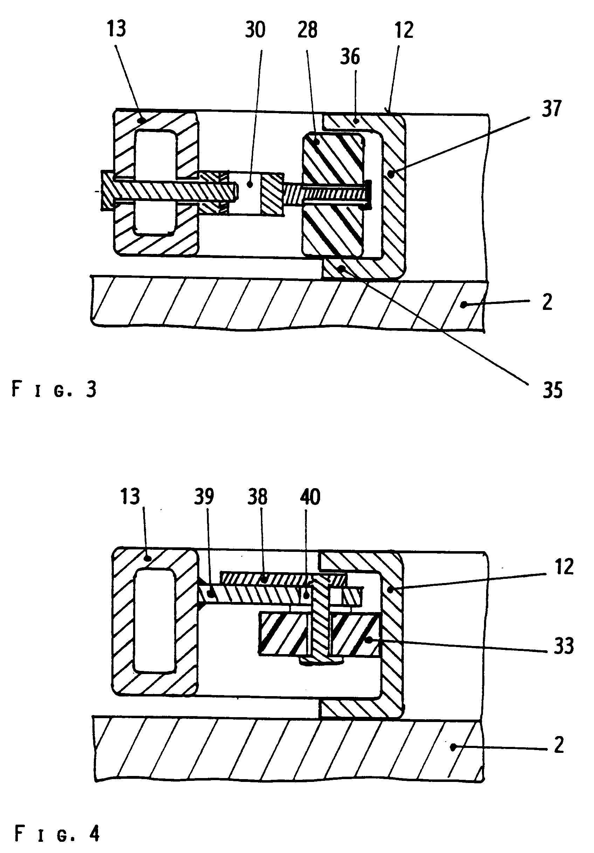

Fig.3 zeigt einen Querschnitt durch das Zentrallager 10 entlang der in Fig.2 mit III-III bezeichneten Linien durch die Laufrollenanordnung 14. Dabei sind die beiden Schenkel des Innenringes 12 mit 35, 36 und der die Schenkel verbindende stegförmige Teil mit 37 bezeichnet. Deutlich ist dieser Fig. zu entnehmen, daß die Tonnenrolle 28 auf dem unteren Schenkel 35 und nicht auf dem oberen Schenkel 36 aufliegt.

Fig.4 zeigt einen entsprechenden Querschnitt des Zentrallagers 10 entlang der in Fig.2 mit IV-IV bezeichneten Linie im Bereich der Zentrierrolle 33. Wie in dieser Fig. schematisch angedeutet ist, kann die Zentrierrolle 33 durch Verschiebung einer Gewindeplatte 38 gegenüber einer Trägerplatte 39 mit Längsschlitz 40 etwas zum inneren Ring 12 hin oder von diesem weg verschoben werden. Die Verstelleinrichtung der Gewindeplatte mit Fixiereinrichtung wurde aus Übersichtlichkeitsgründen nicht dargestellt.

Zur Montage des Zentrallagers 10 an dem Mittelbau 2 werden zunächst die Segmente 18, 19 des Innenringes 12 mit Hilfe der Verbindungsteile 22-25 auf dem Mittelbau 2 befestigt (Fig.2). Anschließend werden die Segmente 20 und 21 des Außenringes 13 mit den an ihnen angeordneten Laufrollenanordnungen 14-17 und Zentrierringen 32-34 von außen an den Innenring 12 herantransportiert und mittels der Verbindungsteile 26, 27 miteinander verbunden. Abschließend kann dann mit Hilfe der an den Zentrierringen 32-34 angeordneten Verstell- und Fixiereinrichtungen eine genaue Justierung des Außenringes 13 in bezug auf den Innenring 12 vorgenommen werden.

### Bezugszeichenliste

- 1: Rundbecken
- 2: Mittelbau
- 3: Beckenkrone
- 4: Räumerbrücke
- 5: Räumbalken
- 6: Räumschild
- 7: Vorläuferbrücke
- 8: Stauschild
- 9: Fahrwerk
- 10: Zentrallager
- 11: Längsachse
- 12: Innenring
- 13: Außenring
- 14-17: Laufrollenanordnungen, Pendellager
- 18,19: Segmente des Innenringes
- 20,21: Segmente des Außenringes
- 22-25: Verbindungsteile
- 26,27: Verbindungsteile
- 28,29: Tonnenrollen, Laufrollen
- 30: Kippträger
- 31: Befestigungsachse
- 32-34: Zentrierrollen
- 35,36: Schenkel
- 37: stegförmiges Teil
- 38: Gewindeplatte
- 39: Trägerplatte
- 40: Längsschlitz

## Patentansprüche

1. Vorläuferbrücke zur Schwimmschlammräumung für ein mit einer Räumerbrücke (4) ausgestattetes Rundbecken (1), wobei die Vorläuferbrücke an ihrem einen Ende an einem Mittelbau (2) des Rundbeckens (1) über ein Zentrallager (10) schwenkbar gelagert und an ihrem anderen Ende mittels eines Fahrwerkes (9) auf der Beckenkrone (3) des Rundbeckens (1) abgestützt ist, **gekennzeichnet durch** die Merkmale:
a) Das Zentrallager (10) setzt sich aus einem in Umfangsrichtung jeweils mindestens zweiteiligen Außenring (13), an dem die Vorläuferbrücke (7) befestigt ist, und einem in Umfangsrichtung mindestens zweiteiligen Innenring (12) zusammen.
b) Der Innenring (12) des Zentrallagers (10) ist mit dem Mittelbau (2) des jeweiligen Rundbeckens (1) fest verbindbar und weist ein U-förmiges Profil auf, wobei sich die Öffnung des U-Profiles auf der dem Außenring (13) zugewandten Seite befindet.
c) An dem Außenring (13) des Zentrallagers (10) sind umfangsseitig auf der dem Innenring (12) zugewandten Seite und über den gesamten Umfang des Zentrallagers(10) verteilt mehrere Laufrollenanordnungen (14 - 17) befestigt, die in das U-Profil des Innenringes (12) hineinreichen und entweder auf dem unteren oder dem oberen Schenkel (35, 36) des U-Profiles drehbar aufliegen und dessen mittelbauseitige Last aufnehmen.

2. Vorläuferbrücke nach Anspruch 1, **dadurch gekennzeichnet**, daß die Laufrollenanordnungen (14 - 17) aus jeweils zwei Laufrollen (28, 29) bestehen, die über einen an dem Außenring (13) befestigten Kippträger (30) miteinander verbunden sind (Pendellager).

3. Vorläuferbrücke nach Anspruch 1 oder 2, **dadurch gekennzeichnet**, daß insgesamt vier Pendellager (14 - 17) vorgesehen sind, wobei jeweils zwei Pendellager (14, 17) auf der der Vorläuferbrücke (7) zugewandten Halbseite des Außenringes (13) und jeweils zwei Pendellager (15, 16) auf der der Vorläuferbrücke (7) abgewandten Halbseite des Außenringes (13) befestigt sind.

4. Vorläuferbrücke nach einem der Ansprüche 1 bis 3, **dadurch gekennzeichnet**, daß zwischen dem Außenring (13) und dem Innenring (12) mindestens drei verstellbare Zentrierrollen (32 - 34) angeordnet sind.

5. Vorläuferbrücke nach Anspruch 4, **dadurch gekennzeichnet**, daß die Zentrierrollen (32 - 34) an dem Außenring (13) verstellbar angeordnet sind und bei ihrer bestimmungsgemäßen Verwendung bewegbar an dem stegförmigen Teil (37) des U-Profiles des Innenringes (12) anliegen.

6. Vorläuferbrücke nach einem der Ansprüche 1 bis 4, **dadurch gekennzeichnet**, daß der Außenring (13) des Zentrallagers (10) aus einem geschlossenen Hohlprofil besteht.

## Claims

1. Leading bridge for scum removal for a circular tank (1) equipped with a scraper bridge (4), the leading bridge being pivoted at one end in a central bearing (10) on the middle construction (2) of the circular tank (1) and the other end being provided with a running wheel on the crest of the tank wall (3), **characterized by** following characteristics:
a) The central bearing (10) comprises at least a two-piece outer ring (13), directed to the tank circumference, to which the leading bridge (7) is attached and at least a two-piece inner ring (12) also directed to the tank circumference.
b) The inner ring (12) of the central bearing (10) can be attached rigidly to the middle construction (2) of the circular tank (1) and is formed as a channel section, the opening of the channel facing the outer ring (13).
c) The outer ring (13) of the central bearing (10) is provided, on its side being directed to the tank circumference with several running wheel groups (14 to 17), distributed over the complete circumference of the central bearing (10), which are facing the inner ring (12) and extending into the opening of the channel section of the inner ring (12) and which rest either on the lower leg or the upper leg (35, 36) of the channel and absorb the load from the middle construction.

2. Leading bridge according to claim 1, **characterized in that** the running wheel groups (14 to 17) consist of two running wheels each (28, 29) which are connected by a rocking arm (3) (pendulum bearing) which is mounted to the outer ring.

3. Leading bridge according to claim 1 or 2, **characterized in that** in total four pendulum bearings (14 to 17) are provided, two pendulum bearings (14, 17) being attached to the outer ring (13) on the ring half to which the leading bridge (7) is attached also and two pendulum bearings (15, 16) being attached to the opposite half of the outer ring (13).

4. Leading bridge according to one of the claims 1 to 3. **characterized in that** at least three adjustable centering rollers (32 to 34) are arranged between the outer ring (13) and the inner ring (12).

5. Leading bridge according to claim 4, **characterized in that** the centering rollers (32 to 34) which are mounted to the outer ring (13) can be adjusted and, according to their designated use, rest movably on the vertical channel section (37) of the inner ring (12).

6. Leading bridge according to one of the claims 1 through 4, **characterized in that** the outer ring (1 3) of the central bearing (10) is made of a closed hollow section.

## Revendications

1. Avant-pont destiné à enlever les écumes dans un bassin circulaire (1) equipé d'un pont racleur (4), une extrémité de l'avant-pont étant logée de manière pivotante dans un palier central (10) sur la construction centrale (2) du bassin circulaire (1) et l'autre extrémité étant pourvue d'une roue de roulement (9) circulant sur la crête (3) du bassin circulaire (1) **caractérisé par** les caractéristiques suivantes:
a) Le palier central (10) est composé d'un anneau extérieur ayant au moins deux parties (13) et étant dirigé vers la circonférence du bassin, auquel se trouve fixé l'avant-pont (7), et d'un anneau intérieur (12) ayant au moins deux parties et étant également dirigé vers la circonférence du bassin.
b) L'anneau intérieur (12) du palier central (10) pouvant être attaché rigidement à la construction centrale (2) du bassin circulaire (1) est un profité en U, positionnée de manière que le côté ouvert du profité en U montre vers l'anneau extérieur (13).
c) Le côté de l'anneau extérieur (13) du palier central (10) étant dirigé vers la circonférence du bassin est muni de plusieurs groupements de roues de roulement (14 - 17) dirigés vers l'anneau intérieur et distribués sur toute la circonférence du palier central (10), et lesquels s'étendent dans l'ouverture du profité en U de l'anneau intérieur (12) et reposent de façon pivotante soit sur le côté inférieur soit supérieur (35, 36) du profilé en U absorbant ainsi la charge provenant de la construction centrale.

2. Avant-pont selon revendication 1, **caractérisé en ce que** chaque groupement de roues de roulement (14 à 17) consiste en deux roues de roulement (28, 29) lesquelles sont reliées par l'intermédiaire d'un appui basculant (30) fixé à l'anneau extérieur (13) (palier à balancier).

3. Avant-pont selon une des revendications 1 ou 2, **caractérisé en ce que** deux paliers à balancier (14, 17), du total de quatre paliers à balancier (14 à 17) étant prévus, sont montés à la partie de l'anneau extérieur (13) où se trouve fixé également l'avant-pont et deux paliers à balancier (15, 16) sont fixé à la partie de l'anneau extérieur (13) opposée.

4. Avant-pont selon une des revendications 1 à 3, **caractérisé en ce qu**'au moins trois poulies à centrer ajustables (32 à 34) sont prévues entre l'anneau extérieur (13) et l'anneau intérieur (12).

5. Avant-pont selon revendication 4, **caractérisé en ce que** les poulies à centrer (32 à 34) sont positionnées sur l'anneau extérieur de manière ajustable et qu'elles adhèrent flexiblement, selon leur usage déerminé, au côté vertical du profilé en U (37) de l'anneau intérieur.

6. Avant-pont selon une des revendications 1 à 4, **caractérisé en ce que** l'anneau extérieur (13) du palier central (10) est un profilé creux fermé.
